# EUROPÄISCHE PATENTSCHRIFT

(11) **EP 3 249 123 B1**
(45) Veröffentlichungstag und Bekanntmachung des Hinweises auf die Patenterteilung: **12.12.2018**
(21) Anmeldenummer: 17020175.0
(22) Anmeldetag: 27.04.2017
(51) Int. Cl.: E03F 7/10

(54) **KANALREINIGUNGSVORRICHTUNG**
CHANNEL CLEANING DEVICE
DISPOSITIF DE NETTOYAGE DE CANAL

(30) Priorität: 25.05.2016 DE 102016006275
(43) Veröffentlichungstag der Anmeldung: 29.11.2017
(73) Patentinhaber: Wiedemann, Karl, 86465 Welden (DE)
(72) Erfinder: Wiedemann, Karl, 86465 Welden (DE)
(74) Vertreter: Munk, Ludwig

(56) Entgegenhaltungen:
- DE-A1- 3 813 419
- DE-U1- 9 411 184

## Beschreibung

Die Erfindung betrifft eine Kanalreinigungsvorrichtung mit einem mit Druckwasser beaufschlagbaren Spülschlauch, der auf einer zugeordneten Speicherhaspel speicherbar ist und einen der Speicherhaspel benachbarten Transportapparat durchläuft, der eine vom Spülschlauch wenigstens einmal umschlungene Haspelanordnung aufweist.

Die DE 38 13 419 A1 zeigt eine Kanalreinigungsvorrichtung mit einem der Speicherhaspel benachbarten Transportapparat. Dieser besteht aus zwei aneinander andrückbaren Transportrollen, zwischen denen der Spülschlauch durchgeführt ist. Mit einem Transportapparat dieser Art lassen sich jedoch nur vergleichsweise kleine Zugkräfte auf den Spülschlauch übertragen. Dementsprechend dient der bekannte Transportapparat nur zum Abziehen des Spülschlauchs von der Speichertrommel. Zum Zurückziehen des Spülschlauchs aus dem Kanal ist der bekannte Transportapparat nicht geeignet. Zum Zurückziehen des Spülschlauchs aus dem Kanal ist nämlich eine hohe Zugkraft erforderlich, die mit zwei an den Schlauch anpressbaren Transportrollen nicht auf den Spülschlauch übertragen werden kann. In diesem Zusammenhang ist nämlich davon auszugehen, dass der Spülschlauch an seinem vorderen Ende mit einer mit Rückstrahldüsen versehenen Kanaldüse bestückt ist und in der Regel entgegen der Rückstoßwirkung der von den Rückstrahldüsen abgegebenen Wasserstrahlen aus dem Kanal zurückgezogen werden muss. Bei der bekannten Anordnung wird der Spülschlauch daher durch einen entsprechenden Antrieb der Speichertrommel aus dem Kanal zurückgezogen und dabei gleichzeitig auf die Speichertrommel aufgewickelt. Dabei besteht jedoch die Gefahr, dass der auf die Speichertrommel auflaufende, von dieser gezogene Spülschlauch im Falle eines durch Durchmesserunterschiede des Spülschlauchs verursachten Spalts zwischen zwei Windungen der Spülschlauchwicklung in Folge der hohen, am Spülschlauch angreifenden Zugkraft in einen derartigen Spalt hineingezogen und dort eingeklemmt wird, so dass der Spülschlauch beim anschließenden Abwickeln an der eingeklemmten Stelle nicht von der Speicherhaspel abläuft, sondern von dieser in Abwickelrichtung mitgenommen wird, was zwangsläufig dazu führt, dass der Spülschlauch umgeknickt und dadurch beschädigt wird, was aus wirtschaftlichen Gründen unerwünscht ist.

Die AT 403 712 B zeigt eine Kanalreinigungsvorrichtung mit einem der Speicherhaspel zugeordneten Transportapparat, der aus einer zusätzlichen Umlenkhaspel besteht, die entfernt von der Speicherhaspel am Fahrzeugheck angeordnet ist. Infolgedessen ergibt sich beim Auflauf des von der Speicherhaspel kommenden Saugschlauchs auf die Umlenkhaspel eine starke Umlenkung, was zu einer hohen Beanspruchung und Störungen führen kann. Außerdem ist bei einer Anordnung mit lediglich einer Umlenkhaspel zur Erzielung einer vergleichsweise hohen Zugkraft eine vergleichsweise große Umschlingungszahl erforderlich, wodurch sich an der Umlenkhaspel dieselben Probleme wie bei der Speicherhaspel gemäß DE 38 13 419 A1 ergeben können.

Hiervon ausgehend ist es daher die Aufgabe der vorliegenden Erfindung, eine Anordnung eingangs erwähnter Art mit einfachen und kostengünstigen Mitteln so zu verbessern, dass eine den Spülschlauch schonende Betriebsweise möglich ist.

Diese Aufgabe wird erfindungsgemäß dadurch gelöst, dass die den Transportapparat bildende Haspelanordnung zwei mit Achsversatz in radialer Richtung seitlich nebeneinander angeordnete Umlenkhaspeln aufweist, die in Richtung ihrer Drehachse zumindest um die Dicke des Spülschlauchs gegeneinander versetzt sind und von denen wenigstens eine Umlenkhaspel um eine die Achsen der beiden Umlenkhaspeln rechtwinklig schneidende Symmetrieachse so gekippt angeordnet ist, dass sich bei jeder kompletten Umschlingung der den Transportapparat bildenden Haspelanordnung durch den Spülschlauch eine dem axialen Versatz der beiden Umlenkhaspeln entsprechende Steigung des dem Spülschlauch zugeordneten Wegs ergibt.

Mit Hilfe der zwei Umlenkhaspeln der den Transportapparat bildenden, vom Spülschlauch umschlungenen Haspelanordnung kann eine hohe Zugkraft auf den Spülschlauch übertragen werden. Der Spülschlauch kann daher mittels des erfindungsgemäßen Transportapparats ohne Weiteres ohne Beteiligung der Speicherhaspel zurückgezogen werden. Die Aufwicklung des vom Transportapparat freigegebenen Spülschlauchs auf die Speicherhaspel kann daher unter vergleichsweise geringer Spannung erfolgen, wodurch die Gefahr eines Einklemmen des Spülschlauchs vermieden wird. In Folge des axialen Versatzes der beiden Umlenkhaspeln ist sichergestellt, dass der in den Transportapparat einlaufende Spülschlauchabschnitt zunächst unter einer ersten Umlenkhaspel durchgeführt werden kann, bevor er auf die zweite Umlenkhaspel aufläuft und dass der aus dem Transportapparat auslaufende Spülschlauch umgekehrt nach Ablauf von der zweiten Umlenkhaspel über die benachbarte erste Umlenkhaspel hinweg geführt werden kann, was eine kompakte Bauweise ermöglicht. In Folge der vorgeschlagenen Kippung wenigstens einer Umlenkhaspel wird erreicht, dass der axiale Versatz der beiden Umlenkhaspeln ausgeglichen wird und daher ein weitgehend geradliniger Verlauf des Spülschlauchs zwischen den beiden Umlenkhaspeln, d.h. ein weitgehend geradliniger Verlauf des Spülschlauchs bei der Übergabe von einer Umlenkhaspel an die benachbarte Umlenkhaspel erreicht wird. Der Spülschlauch kommt daher bei der Übergabe von der einen Umlenkhaspel auf die benachbarte Umlenkhaspel nicht in Kollision mit den Flanschen der Umlenkhaspeln, wodurch der Spülschlauch weiter geschont wird. Mit den erfindungsgemäßen Maßnahmen lassen sich daher die Nachteile der bekannten Anordnung vollständig vermeiden. Die Erfindung ergibt somit eine ausgezeichnete Wirtschaftlichkeit.

Vorteilhafte Ausgestaltungen und zweckmäßige Fortbildungen der übergeordneten Maßnahmen sind in den Unteransprüchen angegeben.

Vorteilhaft können beide Umlenkhaspeln, um die die Achsen der beiden Umlenkhaspeln rechtwinklig schneidende Symmetrieachse gegenläufig gekippt angeordnet sein, wobei sich jeweils im Bereich zwischen Auflauf und Ablauf des Spülschlauchs auf die bzw. von der jeweiligen Umlenkhaspel eine der Hälfte des axialen Versatzes der beiden Umlenkhaspeln entsprechende Steigung ergibt. In der Summe ergibt sich somit bei jeder Umschlingung des Transportapparats eine dem axialen Versatz der beiden Umlenkhaspeln entsprechende Steigung. Hierbei reichen in vorteilhafter Weise bereits vergleichsweise kleine Kippwinkel aus, so dass eine besonders kompakte Bauweise erreichbar ist.

Eine weitere vorteilhafte Maßnahme kann darin bestehen, dass die den Transportapparat bildende Haspelanordnung vom Spülschlauch mehrfach, vorzugsweise zweimal, umschlungen ist, wobei die Umlenkhaspeln jeweils mehrere, vorzugsweise zwei, in axialer Richtung parallel hintereinander angeordnete, durch seitliche Flansche begrenzte Umlaufnuten zur Führung des Spülschlauchs aufweisen. Bei einer Umfangsnut pro Umlenkhaspel ergibt sich für den Transportapparat eine Gesamtumschlingung von 360°. Durch Erhöhung der Anzahl der Umfangsnuten kann die Gesamtumschlingung gesteigert und damit die übertragbare Zugkraft erhöht werden. Dieser Vorteil lässt sich dadurch noch verstärken, dass der Nutgrund der Umlaufnuten mit einer die Mitnahme des aufliegenden Spülschlauchs erhöhenden, vorzugsweise gezahnten Oberflächenstruktur versehen ist.

In weiterer Fortbildung der übergeordneten Maßnahmen können die Speicherhaspel und die Umlenkhaspeln des Transportapparats durch Hydraulikmotoren antreibbar sein, die beim Zurückziehen des Spülschlauchs aus dem Kanal parallel geschaltet sind, wobei der der Speichertrommel zugeordnete Hydraulikmotor ein kleineres Schluckvolumen aufweist als die den Umlenkhaspeln zugeordneten Hydraulikmotoren. Hierdurch wird sichergestellt, dass die zum Zurückziehen des Spülschlauchs aus dem Kanal benötigte Zugkraft durch den Transportapparat aufgebracht wird und dass die Speichertrommel beim Zurückziehen des Spülschlauchs aus dem Kanal lediglich eine geringe Zugkraft auf den vom Transportapparat frei gegebenen Spülschlauch ausübt, so dass dieser zwar stramm, aber ohne große Spannung auf die Speicherhaspel aufgewickelt wird.

Beim Abwickeln des Spülschlauchs werden zweckmäßig die Umlenkhaspeln des Transportapparats in Abwickelrichtung angetrieben und die Speicherhaspel so gebremst, dass der Spülschlauch in gestreckter Form von dieser abgezogen wird. Hierzu kann die Antriebseinrichtung der Speicherhaspel zweckmäßig mit einem Druckminderungsventil versehen sein, das beim Abwickelvorgang aktiviert ist und eine Bremswirkung erzeugt, die vom Transportapparat überwunden wird.

In weiterer Fortbildung der übergeordneten Maßnahmen können die Umlenkhaspeln des Transportapparats und vorzugsweise auch die Speicherhaspel mit stehender Achse und liegenden Windungen angeordnet sein. Dies ergibt eine flache Bauweise und erleichtert die Aufnahme der Speicherhaspel und des Transportapparats auf einem, um eine stehende Achse schwenkbaren Ausleger, auf dem auch ein in den Kanal absenkbarer Saugschlauch samt zugeordneter Aufnahmehaspel aufnehmbar ist.

Weitere vorteilhafte Ausgestaltungen und zweckmäßige Fortbildungen der übergeordneten Maßnahmen sind in den restlichen Unteransprüchen angegeben und aus der nachstehenden Beschreibung anhand der Zeichnung entnehmbar.

In der nachstehend beschriebenen Zeichnung zeigen:
- Figur 1: eine schematische Darstellung eines erfindungsgemäßen Kanalreinigungsfahrzeugs,
- Figur 2: eine perspektivische Seitenansicht des Transportapparats der Anordnung gemäß Fig. 1 von schräg oben und
- Figur 3: eine Seitenansicht des erfindungsgemäßen Transportapparats von der der in Figur 2 gezeigten Seite gegenüberliegenden Seite.

Hauptanwendungsgebiet der vorliegenden Erfindung sind Fahrzeuge mit einem als Kanalreinigungsvorrichtung ausgebildeten Aufbau, also sogenannte Kanalreinigungsfahrzeuge, deren grundsätzlicher Aufbau und Wirkungsweise bekannt sind.

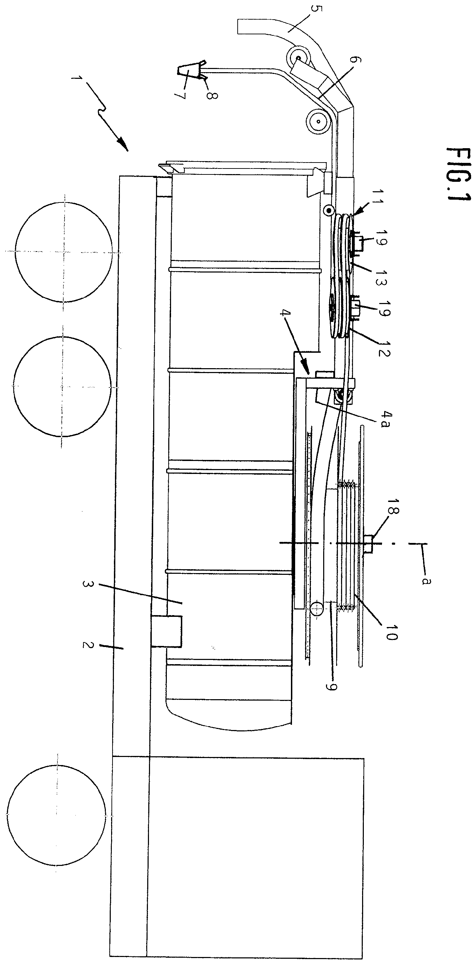

Das in Fig. 1 dargestellte Kanalreinigungsfahrzeug 1 enthält einen auf einer Chassis 2 aufgenommenen, vorzugsweise fassförmigen Behälter 3 mit nicht näher angedeuteten Kammern für das zur Kanalreinigung benötigte Wasser und den bei der Kanalreinigung anfallenden, aus dem Kanal aufgesaugten Schlamm. Auf dem Behälter 3 ist ein um eine stehende Achse a drehbarer Ausleger 4 aufgenommen, über den ein in den Kanal absenkbarer, mittels einer nicht näher dargestellten Vakuumquelle mit Saugzug beaufschlagbarer Saugschlauch 5, sowie ein in den Kanal einführbarer, mit Hochdruckwasser beaufschlagbarer Spülschlauch 6 ablaufen. Hierzu kann der Ausleger 4 am hinteren Ende rüsselförmig nach unten gerichtet sein. Zur Vergrößerung des Aktionsradiusses können der Ausleger 4 teleskopartig ausschiebbar ausgebildet sein. Der Spülschlauch 6 ist an seinem vorderen Ende mit einer sogenannten Kanaldüse 7 bestückt, die mit Rückstrahldüsen 8 versehen ist, die einen den Spülschlauch 6 in den Kanal einziehenden Rückstoß bewirken.

Der Saugschlauch 5 ist hier auf eine zugeordnete Saugschlauchhaspel 9 aufwickelbar, die mit zur Achse a des Auslegers 4 koaxialer, stehender Achse und liegenden Windungen auf dem Ausleger 4 aufgenommen ist. Zur Speicherung des mittels einer nicht näher dargestellten Hochdruckpumpe mit Hochdruckwasser beaufschlagbaren Spülschlauchs 6 ist eine auf dem Kanalreinigungsfahrzeug 1 aufgenommene Speicherhaspel 10 vorgesehen. Neben der Speicherhaspel 10 befindet sich ein Transportapparat 11, der vom Spülschlauch 6 durchlaufen wird und in erster Linie dazu dient, die zum Zurückziehen des Spülschlauchs 6 aus dem Kanal erforderliche Zugkraft auf den Spülschlauch 6 zu übertragen.

Der Transportapparat 11 besteht aus einer Haspelanordnung mit zwei mit Achsversatz in radialer Richtung nebeneinander angeordneten Umlenkhaspeln 12, 13. Die Speicherhaspel 10 und die beiden Umlenkhaspeln 12, 13 sind hier ebenfalls dem Ausleger 4 zugeordnet und, um eine flache Bauweise zu ermöglichen, zweckmäßig ebenfalls mit stehender Achse und liegenden Windungen angeordnet. Die Saugschlauchhaspel 9 kann zweckmäßig auf dem Ausleger 4 aufliegen. Die Speicherhaspel 10 kann zur Bildung eines Haspelpakets vorteilhaft auf der Saugschlauchhaspel 9 angeordnet sein. Um die Bauhöhe zu begrenzen ist der Ausleger 4 mit einer Abstufung 4a versehen, so dass sich eine dem genannten Haspelpaket zugeordnete Nische ergibt. Der fassförmige Behälter 3 ist zweckmäßig mit einer der Abstufung 4a des Auslegers 4 zugeordneten, oberen Abflachung versehen, die eine Nische für den abgestuften, vorderen Bereich des Auslegers 4 bildet. Die Umlenkhaspeln 12, 13 sind hier an einer Seite des Auslegers 4, zweckmäßig des an die Abstufung 4a nach hinten anschließenden Abschnitts des Auslegers 4, angebracht.

Die beiden Umlenkhaspeln 12, 13 des Transportapparats 11 sind in axialer Richtung zumindest um den Durchmesser des mit Hochdruckwasser beaufschlagbaren Spülschlauchs 6 gegeneinander versetzt, so dass es möglich ist, mit dem auf die tiefer positionierte Umlenkhaspel 12 auflaufenden Spülschlauchabschnitt 6a die höher positionierte Umlenkhaspel 13 zu unterfahren und umgekehrt mit dem von der höher positionierten Umlenkhaspel 13 ablaufenden Spülschlauchabschnitt 6b die tiefer positionierte Umlenkhaspel 13 zu überfahren. Zweckmäßig ist, wie in Fig. 1 angedeutet ist, die der Speicherhaspel 10 zugewandte Umlenkhaspel 12 tiefer positioniert und die dem Ende des Auslegers 4 zugewandte Umlenkhaspel 13 höher positioniert, was eine günstige Führung des Spülschlauchs 6 ermöglicht.

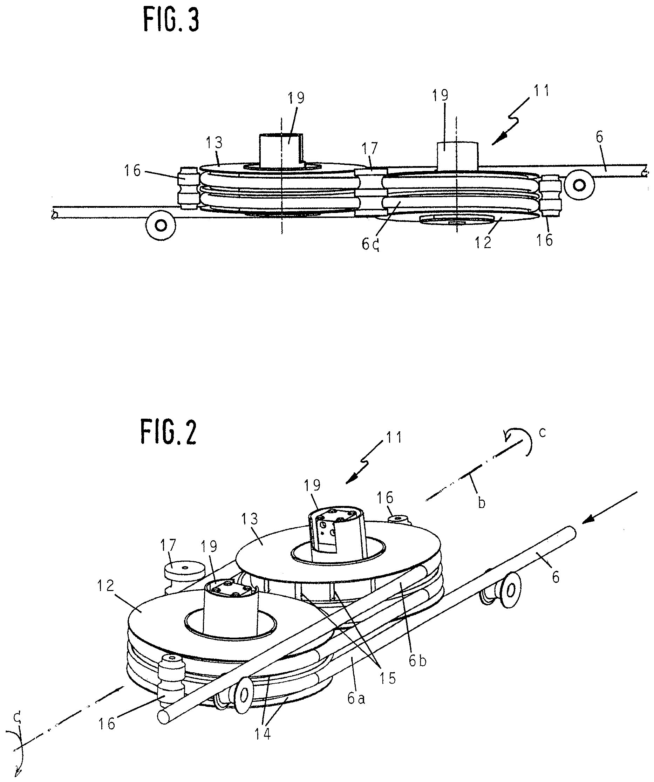

Die den Transportapparat 11 bildende Haspelanordnung wird, wie Fig. 2 anschaulich zeigt, vom Spülschlauch 6 wenigstens einmal, vorzugsweise mehrfach umschlungen. Bei jeder Umschlingung des Transportapparats 11 sind dabei die beiden Umlenkhaspeln 12, 13 des Transportapparats 11 im Bereich ihrer voneinander abgewandten Umfangsbereiche im Eingriff mit dem Spülschlauch. Im dargestellten Beispiel besitzen die beiden Umlenkhaspeln 12, 13 gleiche Durchmesser, so dass sich an jeder Umlenkhaspel ein Eingriffsbereich von jeweils 180° ergibt. Für jede Umschlingung des Transportapparats ergibt sich somit ein Umschlingungswinkel von 360°, über dem der Spülschlauch 6 nacheinander im Eingriff mit den beiden Umlenkhaspeln 12, 13 ist. Der in den Transportapparat 11 einlaufende Spülschlauch 6 wird, wie aus Fig. 3 ersichtlich ist, nach Beendigung der ersten Umschlingung der ersten Umlenkhaspel 12 von dieser in Form eines etwa tangential verlaufenden Schlauchabschnitts 6c zur benachbarten Umlenkhaspel 13 geführt und nach Durchlaufen des dortigen Eingriffsbereichs entweder aus dem Transportapparat 11 herausgeführt oder im Falle mehrspuriger Umlenkhaspeln zur ersten Umlenkhaspel 12 zurückgeführt usw..

Um sicherzustellen, dass der Spülschlauch 6 trotz des Höhenversatzes der beiden Umlenkhaspeln 12, 13 biegungsfrei auf jeweils einem Niveau von der einen Umlenkhaspel zur benachbarten Umlenkhaspel überführt werden kann, ist mindestens eine der beiden Umlenkhaspeln 12, 13 um eine die Achsen der beiden Umlenkhaspeln 12, 13 rechtwinklig schneidende, und somit auch parallel zum auf sie auf- bzw. von ihr ablaufenden Abschnitt 6a bzw. 6b des Spülschlauchs 6 verlaufende, in Fig. 2 durch eine strichpunktierte Linie angedeutete Symmetrielinie b gekippt angeordnet, wie in Fig. 2 weiter durch einen der Symmetrielinie b zugeordneten Drehpfeil c verdeutlicht ist.

Zweckmäßig sind beide Umlenkhaspeln 12, 13 um die genannte Symmetrielinie b gegenläufig gekippt angeordnet, wie in Fig. 2 durch zwei gegenläufige Drehpfeile c angedeutet ist, wobei zweckmäßig gleiche Kippwinkel vorgesehen sind. Der Kippwinkel ist in jedem Fall so bemessen, dass sich durch den hierdurch bewirkten gegenläufigen Abstieg bzw. Anstieg jeweils einer Hälfte der einander benachbarten Umlenkhaspeln 12, 13 ein Ausgleich ihres gegenseitigen Versatzes in axialer Richtung, hier des gegenseitigen Höhenversatzes, ergibt. Sofern, wie im dargestellten Beispiel, beide Umlenkhaspeln 12, 13, gegenläufig zueinander gekippt sind, ist der Kippwinkel so bemessen, dass sich auf dem Eingriffsbereich von 180°, d.h. zwischen Auflauf und Ablauf des Spülschlauchs 6 auf die betreffende Umlenkhaspel 12, bzw. 13 eine dem halben Durchmesser des Spülschlauchs 6 entsprechende Steigung ergibt, so dass zwei aufeinander folgende Eingriffsbereiche auf der ersten und der zweiten Umlenkhaspel 12, 13 und dementsprechend eine 360°-Umschlingung des durch die beiden Umlenkhaspeln 12, 13 gebildeten Transportapparats 11 eine dem vollen Durchmesser des Spülschlauchs 6 entsprechende Gesamtsteigung ergeben. Zwischen dem unteren Scheitelpunkt und dem oberen Scheitelpunkt der tiefer gesetzten Umlenkhaspel 12 und dem anschließend durchlaufenen Bereich zwischen dem unteren Scheitelpunkt und dem oberen Scheitelpunkt der benachbarten, gegenläufig gekippten Umlenkhaspel 13 wird der Spülschlauch hier jeweils um die Hälfte seines Durchmessers, und somit insgesamt um seinen ganzen Durchmesser nach oben geführt, wodurch der Höhenversatz der Umlenkhaspeln ausgeglichen ist.

Sofern nur eine Umlenkhaspel gekippt ist, muss der Kippwinkel so gewählt sein, dass sich auf dem Eingriffsbereich der gekippten Umlenkhaspel eine dem vollen Durchmesser des Spülschlauchs 6 entsprechende Steigung ergibt, da die benachbarte Umlenkhaspel auf dem ganzen Umfang niveaugleich umläuft, also keinen Beitrag zur Steigung leistet. In jedem Fall muss der Kippwinkel so bemessen sein, dass die Gesamtsteigung der nacheinander auf beiden Umlenkhaspeln durchlaufenen Eingriffsbereiche und dementsprechend einer vollen Umschlingung der den Transportapparat 11 bildenden Haspelanordnung eine dem Axialversatz der Umlenkhaspeln 12, 13 und damit hier dem Durchmesser des Spülschlauchs 6 entsprechende Gesamtsteigung ergeben.

Die Umlenkhaspeln 12, 13 sind mit in Fig. 2 bezeichneten, umlaufenden Umfangsnuten 14 zur Führung des jeweils aufgenommenen Spülschlauchabschnitts versehen. Im dargestellten Beispiel sind die Umlenkhaspeln 12, 13 jeweils mit zwei parallel übereinander angeordneten Umfangsnuten 14 versehen. Mehr oder weniger wären denkbar. Je mehr parallele Umfangsnuten 14 vorgesehen sind, umso öfter kommen die Umlenkhaspeln 12, 13 mit dem Spülschlauch 6 auf dem vorgesehenen Eingriffsbereich in Eingriff und umso größer ist dementsprechend der Gesamtumschlingungswinkel und dementsprechend die übertragbare Kraft.

In Folge der gegenläufig gekippten Anordnung der Umlenkhaspeln 12, 13 befinden sich die nach oben gekippte Hälfte der einen Umlenkhaspel 12 bezüglich der Symmetrielinie b auf derselben Seite wie die nach unten gekippte Hälfte der anderen Umlenkhaspel 13. Gemäß Fig. 3 wird dadurch erreicht, dass auf der vom Ein- bzw. Ausgang des Transportapparats 11 jeweils abgewandten, in Fig. 3 gezeigten Seite der beiden Umlenkhaspeln 12, 13 die Umfangsnuten 14 der nach oben gekippten Hälfte der einen Umlenkhaspel 12 niveaugleich zu den Umfangsnuten 14 der nach unten gekippten Hälfte der anderen Umlenkhaspel 13 sind. Der Spülschlauch 6 wird dementsprechend niveaugleich von der Umlenkhaspel 12 auf die nachfolgende Umlenkhaspel 13 übergeben und hat daher zwischen den beiden Umlenkhaspeln einen geradlinigen, achsnormalen Verlauf. Dasselbe gilt natürlich, wie Fig. 2 zeigt, für die Übergabe des Spülschlauchs 6, von der unteren Umfangsnut 14 der hochgekippten Hälfte der höher positionierten Umlenkhaspel 13 auf die zweite Umfangsnut 14 der nach unten gekippten Hälfte der tiefer positionierten Umlenkhaspel 12.

Der gemäß Fig. 2 von rechts aus dem Kanal zurückgezogene Spülschlauch 6 wird zunächst unter der nach oben gekippten Hälfte der dem hinteren Ende des Auslegers 4 zugewandten, höher positionierten Umlenkhaspel 13 hindurch geführt, und läuft dann im Bereich der nach unten gekippten Hälfte der der Speicherhaspel 10 zugewandten Umlenkhaspel 12 in deren untere Umlenknut 14 ein. Diese steigt in Folge der gekippten Anordnung im anschließenden, über einen Winkel von 180° sich erstreckenden Eingriffsbereich von ihrem in Fig. 2 vorne gezeigten, tiefsten Niveau zu ihrem diametral gegenüberliegenden, in Fig. 3 vorne gezeigten höchsten Niveau an, wo der Spülschlauch 6 von der Umlenkhaspel 12 abläuft und zur benachbarten, höher positionierten Umlenkhaspel 13 geführt wird. Da diese gegenläufig zur Umlenkhaspel 12 gekippt angeordnet ist, befindet sich ihre nach unten gekippte Hälfte in Laufrichtung des Spülschlauchs 6 neben der nach oben gekippten Hälfte der Umlenktrommel 12, wie aus Fig. 3 anschaulich hervorgeht.

Durch die Wahl des geeigneten Kippwinkels wird auf diese Weise der axiale Versatz der beiden Umlenkhaspeln 12, 13 ausgeglichen, so dass der in Figur 3 erscheinende, obere Scheitelpunkt der unteren Umfangsnut 14 der tiefer positionierten Umlenkhaspel 12, an welchem der Spülschlauch 6 von dieser abläuft, und der untere Scheitelpunkt der unteren Umfangsnut der gegenläufig gekippten Umlenkhaspel 13, an welchem der die Umlenkhaspel 12 verlassende Spülschlauch 6 auf die benachbarte Umlenkhaspel 13 aufläuft, niveaugleich, d.h. koplanar angeordnet sind. Dies setzt sich, wie aus Fig. 2 ersichtlich ist, auf der gegenüberliegenden Seite in umgekehrter Weise fort, wenn der Spülschlauch von der unteren Umfangsnut 14 der hochgekippten Hälfte der Umlenkhaspel 13 auf die zweite Umfangsnut 14 der nach unten gekippten Hälfte der benachbarten Umlenkhaspel 12 gelangt usw.. Nachdem der Spülschlauch 6 die den Transportapparat 11 bildende Haspelanordnung je nach Anzahl der vorhandenen Umfangsnuten 14 einmal oder mehrmals, im dargestellten Beispiel zweimal umschlungen hat, und am oberen Scheitelpunkt der nach oben gekippten Hälfte der höher positionierten Umlenkhaspel 13 von dieser abläuft, wird er über die nach unten gekippte Hälfte der benachbarten Umlenkhaspel 12 hinweg zur Speicherhaspel 10 geführt.

Generell wird durch die gekippte Anordnung wenigstens einer Umlenkhaspel bzw. die gegenläufig gekippte Anordnung beider Umlenkhaspeln 12, 13 erreicht, dass trotz des gegenseitigen Versatzes in Axialrichtung, im dargestellten Beispiel trotz des gegenseitigen Höhenversatzes der beiden Umlenkhaspeln 12, 13 die Scheitelpunkte der Umfangsnuten 14, an denen der Spülschlauch 6 von einer Umlenkhaspel abläuft und anschließend auf die benachbarte Umlenkhaspel aufläuft, sich in einer Ebene befinden und dementsprechend niveaugleich sind, so dass der Spülschlauch 6 in gerader Linie ab- bzw. auflaufen kann, wodurch ein Scheuern an den seitlichen Begrenzungen der Umfangsnuten 14 vermieden und damit der Spülschlauch 6 geschont wird.

Die Umfangsnuten 14 der Umlenkhaspeln 12, 13 werden durch seitliche Flansche begrenzt, die jeweils über eine den Nutgrund bildende, zentrale Trommel in radialer Richtung vorspringen. Diese kann mit einer in Figur 2 angedeuteten, die Kraftübertragung zwischen den Umlenktrommeln 12, 13 und dem hiermit zusammenwirkenden Spülschlauch 6 begünstigenden Oberflächenstruktur 15 versehen sein. Diese kann, wie in Fig. 2 angedeutet ist, nach Art einer Verzahnung ausgebildet sein. Zur weiteren Unterstützung der Kraftübertragung zwischen Umlenkhaspeln 12, 13 und Spülschlauch 6 können jeweils dem Eingriffsbereich der Umlenkhaspeln 12, 13 zugeordnete, den Spülschlauch 6 in den Umfangsnuten 14 haltende, und an den Nutgrund andrückende Andrückrollen 16 vorgesehen sein. Diese besitzen zweckmäßig für jede Umfangsnut 14 einen umlaufenden Bund, was einen zuverlässigen Eingriff in die jeweils zugeordnete Umfangsnut 14 ermöglicht. Im Bereich zwischen den beiden Umlenkhaspeln 12, 13 können Leitelemente, zweckmäßig in Form von Leitrollen 17 vorgesehen sein, welche die tangential zwischen den beiden Umlenkhaspeln 12, 13 verlaufenden Spülschlauchabschnitte führen und gegen Ausweichen nach außen abstützen. Die Leitelemente 17 besitzen daher zweckmäßig für jeden Spülschlauchabschnitt eine umlaufende Einkerbung.

Der durch die beiden Umlenkhaspeln 12, 13 gebildete Transportapparat 11 überträgt die beim Zurückziehen des Spülschlauchs 6 erforderliche Zugkraft auf den Spülschlauch 6 und entlastet auf diese Weise die nachgeordnete Speichertrommel 10. Diese läuft dabei lediglich mit geringer Voreilung gegenüber dem Transportapparat 11, so dass der den Transportapparat 11 verlassende, von diesem freigegebene Spülschlauchabschnitt exakt, d.h. stramm, aber lediglich mit geringer Spannung auf die Speicherhaspel 10 aufgewickelt wird.

Zum Antrieb der Speicherhaspel 10 sowie der Umlenkhaspeln 12, 13 sind diesen jeweils zugeordnete Hydraulikmotoren 18, 19 vorgesehen, die beim Zurückziehen des Spülschlauchs 6 aus dem Kanal parallel geschaltet, d.h. an eine gemeinsame Druckquelle angeschlossen sind. Der der Speichertrommel 10 zugeordnete Hydraulikmotor 18 besitzt dabei ein wesentlich kleineres Schluckvolumen als die den Umlenktrommeln 12, 13 zugeordneten Hydraulikmotoren 19, wodurch bewirkt wird, dass der vom Transportapparat 11 freigegebene Spülschlauch 6 nur mit geringer Spannung auf die Speicherhaspel 10 aufgewickelt wird. Beim Abwickeln des Spülschlauchs 6 von der Speicherhaspel 10 werden die Umlenkhaspeln 12, 13 in Abwickelrichtung angetrieben und die Speicherhaspel 10 so gebremst, dass der hiervon abgewickelte Spülschlauch 6 im Bereich zwischen der Speicherhaspel 10 und dem Transportapparat 11 unter leichter Spannung gestreckt verläuft. Hierzu kann der der Speicherhaspel 10 zugeordnete Hydraulikmotor 18 ein Druckminderungsventil aufweisen, so dass er als Bremse benutzt werden kann. Vorstehend ist zwar ein bevorzugtes Ausführungsbeispiel der Erfindung näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der erfindungsgemäßen Lösung an die Verhältnisse des Einzelfalls anzupassen. So wäre es beispielsweise auch denkbar, den Transportapparat 11 statt seitlich oben oder unten am Ausleger 4 anzubringen. Ebenso wäre es denkbar, den Transportapparat 11 und/oder die Speicherhaspel 10 mit horizontaler Achse und stehenden Windungen anzuordnen. Auch die Anzahl der Umfangsnuten 14 der Umlenkhaspeln 12, 13 kann, wie oben schon erwähnt, nach oben oder unten variiert werden, etc.. Der beanspruchte Schutzumfang wird in den beigefügten Ansprüchen definiert.

## Patentansprüche

1. Kanalreinigungsvorrichtung mit einem mit Druckwasser beaufschlagbaren Spülschlauch (6), der auf einer zugeordneten Speicherhaspel (10) speicherbar ist und der einen der Speicherhaspel (10) benachbarten Transportapparat (11) durchläuft, der eine vom Spülschlauch (6) wenigstens einmal umschlungene Haspelanordnung aufweist, **dadurch gekennzeichnet, dass** die den Transportapparat (11) bildende Haspelanordnung zwei mit Achsversatz in radialer Richtung seitlich nebeneinander angeordnete Umlenkhaspeln (12, 13) aufweist, die in Richtung ihrer Drehachse zumindest um die Dicke des Spülschlauchs (6) gegeneinander versetzt sind und von denen wenigstens eine Umlenkhaspel (12, 13) um eine die Achsen der beiden Umlenkhaspeln (12, 13) rechtwinklig schneidende Symmetrieachse (b) so gekippt angeordnet ist, dass sich bei jeder kompletten Umschlingung der den Transportapparat (11) bildenden Haspelanordnung durch den Spülschlauch (6) eine dem axialen Versatz der beiden Umlenkhaspeln (12, 13) entsprechende Steigung des dem Spülschlauch (6) zugeordneten Wegs ergibt.

2. Vorrichtung nach Anspruch 1, **dadurch gekennzeichnet, dass** beide Umlenkhaspeln (12, 13) um die die Achsen der beiden Umlenkhaspeln (12, 13) rechtwinklig schneidende Symmetrieachse (b) gegenläufig gekippt angeordnet sind, wobei vorzugsweise jeweils im Bereich zwischen Auflauf und Ablauf des Spülschlauchs (6) auf die bzw. von der jeweiligen Umlenkhaspel (12 bzw. 13) eine der Hälfte des axialen Versatzes der beiden Umlenkhaspeln (12, 13) entsprechende Steigung vorgesehen ist.

3. Vorrichtung nach einem der vorhergehenden Ansprüche, **dadurch gekennzeichnet, dass** die den Transportapparat (11) bildende Haspelanordnung vom Spülschlauch (6) mehrfach, vorzugsweise zweimal, umschlungen ist, wobei die Umlenkhaspeln (12, 13) jeweils mehrere, vorzugsweise zwei, in axialer Richtung parallel hintereinander angeordnete, durch seitliche Flansche begrenzte Umfangsnuten (14) zur Führung des Spülschlauchs (6) aufweisen.

4. Vorrichtung nach Anspruch 3, **dadurch gekennzeichnet, dass** die die Umfangsnuten (14) begrenzenden Flansche radial über eine den Nutgrund der Umfangsnuten (14) bildende Trommel vorspringen, die eine die Kraftübertragung auf den Spülschlauch (6) erhöhende, vorzugsweise als Zahnung (15) ausgebildete, Oberflächenstruktur aufweist.

5. Vorrichtung nach einem der vorhergehenden Ansprüche, **dadurch gekennzeichnet, dass** den Umlenkhaspeln (12, 13) zugeordnete, vorzugsweise als Andrückrollen (16) ausgebildete, den Spülschlauch (6) andrückende Andrückorgane zugeordnet sind.

6. Vorrichtung nach einem der vorhergehenden Ansprüche, **dadurch gekennzeichnet, dass** im Bereich des Verlaufs des Spülschlauchs (6) zwischen den beiden Umlenkhaspeln (12, 13) dem Spülschlauch (6) zugeordnete, vorzugsweise als Leitrollen (17) ausgebildete, Leitelemente vorgesehen sind.

7. Vorrichtung nach einem der vorhergehenden Ansprüche, **dadurch gekennzeichnet, dass** die Speicherhaspel (10) und die Umlenkhaspel (12, 13) durch Hydraulikmotoren (18, 19) der Vorrichtung antreibbar sind, die beim Zurückziehen des Spülschlauchs (6) aus dem Kanal parallel geschaltet sind, wobei der der Speichertrommel (10) zugeordnete Hydraulikmotor (18) ein kleineres Schluckvolumen aufweist als die den Umlenkhaspeln (12, 13) zugeordneten Hydraulikmotoren (19).

8. Vorrichtung nach einem der vorhergehenden Ansprüche, **dadurch gekennzeichnet, dass** beim Abwickeln des Spülschlauchs (6) von der Speicherhaspel (10) die Umlenkhaspeln (12, 13) in Abwickelrichtung antreibbar sind und die Speicherhaspel (10) mittels eines zugeordneten Druckminderungsventils gebremst ist.

9. Vorrichtung nach einem der vorhergehenden Ansprüche, **dadurch gekennzeichnet, dass** zumindest die Umlenkhaspeln (12, 13) der den Transportapparat (11) bildenden Haspelanordnung, vorzugsweise auch die Speicherhaspel (10), jeweils mit stehender Achse und liegenden Windungen angeordnet sind.

10. Vorrichtung nach einem der vorhergehenden Ansprüche mit einem schwenkbaren Ausleger (4), **dadurch gekennzeichnet, dass** zumindest die Umlenkhaspeln (12, 13) der den Transportapparat (11) bildenden Haspelanordnung, vorzugsweise seitlich, an dem schwenkbaren Ausleger (4) angebracht sind.

11. Vorrichtung nach Anspruch 10, **dadurch gekennzeichnet, dass** die dem Spülschlauch (6) zugeordnete Speicherhaspel (10) sowie eine einem über den Ausleger (4) geführten Saugschlauch (5) zugeordnete Saugschlauchhaspel (9) jeweils im Bereich einer stehenden Schwenkachse (a) des Auslegers (4) mit hierzu koaxialer, stehender Achse und liegenden Windungen angeordnet sind.

12. Vorrichtung nach Anspruch 11, **dadurch gekennzeichnet, dass** die Saugschlauchhaspel (9) auf dem Ausleger (4) aufliegt und dass die dem Spülschlauch (6) zugeordnete Speicherhaspel (10) auf die Saugschlauchhaspel (9) aufgesetzt ist.

13. Vorrichtung nach Anspruch 12, **dadurch gekennzeichnet, dass** der Ausleger (4) mit einer Abstufung (4a) versehen ist, die eine Nische für das durch die Saugschlauchhaspel (9) und die Speicherhaspel (10) gebildete Haspelpaket ergibt.

14. Vorrichtung nach Anspruch 13, wobei der Ausleger (4) auf einem, vorzugsweise fassförmigen, Behälter (3) drehbar gelagert ist, **dadurch gekennzeichnet, dass** der Behälter (3) oben zur Bildung einer der Abstufung (4a) des Auslegers (4) zugeordneten Nische zumindest auf einem Teil seiner Länge abgeflacht ist.

15. Vorrichtung nach einem der vorhergehenden Ansprüche, **dadurch gekennzeichnet, dass** der Spülschlauch (6) an seinem vorderen, in den Kanal einführbaren Ende mit einer mit Rückstrahldüsen (8) versehenen Kanaldüse (7) bestückt ist und mittels des Transportapparats (11) entgegen der Rückstoßwirkung der Rückstrahldüsen (8) zurückziehbar ist und dass der Antrieb der Speicherhaspel (10) hiervon entlastet ist.

## Claims

1. Channel clearing device, having a rinsing hose (6) which can be supplied with pressurizable water and is stored on an associated storage reel (10) and passes through a transport apparatus (11) which adjoins the storage reel (10) and comprises a reel arrangement around which a rinsing hose (6) is wrapped at least once, **characterized in that** the reel arrangement forming the transport apparatus (11) has two deflecting reels (12, 13) which are laterally juxtaposed with offset in the radial direction and which are mutually offset in the direction of their axis of rotation at least by the thickness of the rinsing hose (6), and of which at least one deflecting reel (12, 13) is arranged tilted about an axis of symmetry (b) perpendicularly intersecting the axes of the two deflecting reels (12, 13) in such a way that at each complete loop of the reel arrangement forming the transport apparatus (11) by the rinsing hose (6) an ascending gradient of the path associated with the rinsing hose (6) corresponding to the axial offset of the two deflecting reels (12, 13) is obtained.

2. Device according to claim 1, **characterized in that** both deflecting reels (12, 13) are arranged tilted in opposite directions about the axis of symmetry (b) perpendicularly intersecting the axes of the two deflecting reels (12, 13), wherein preferably in each case in the area between run-up and retraction of the rinsing hose (6) onto or from the respective deflection reel (12 or 13) an ascending gradient is provided which corresponds to half the axial offset of the two deflecting reels (12, 13).

3. Device according to one of the preceding claims, **characterized in that** the reel arrangement forming the transport apparatus (11) is looped several times, preferably twice, by the rinsing hose (6), wherein the deflecting reels (12, 13) each have several, preferably two, circumferential grooves (14) for guiding the rinsing hose (6), said grooves being arranged in the axial direction in parallel one behind another and being delimited by lateral flanges.

4. Device according to claim 3, **characterized in that** the flanges delimiting the circumferential grooves (14) protrude radially beyond a drum forming the groove base of the circumferential grooves (14) and having a surface structure which increases the force transmission to the rinsing hose (6) and is preferably formed as a tooth structure (15).

5. Device according to one of the preceding claims, **characterized in that** pressure elements are assigned to the deflecting reels (12, 13), said pressure elements preferably being formed as pressure rollers (16) and pressing against the rinsing hose (6).

6. Device according to one of the preceding claims, **characterized in that** guiding elements, which are assigned to the rinsing hose (6) and preferably formed as guide rollers (17), are provided in the region of the extension of the rinsing hose (6) between the two deflecting reels (12, 13).

7. Device according to one of the preceding claims, **characterized in that** the storage reel (10) and the deflecting reel (12, 13) can be driven by hydraulic motors (18, 19) of the device, which are connected in parallel during retraction of the rinsing hose (6) from the channel, wherein the hydraulic motor (18) assigned to the storage reel (10) has a smaller displacement volume than the hydraulic motors (19) assigned to the deflecting reels (12, 13).

8. Device according to one of the preceding claims, **characterized in that** during unwinding of the rinsing hose (6) from the storage reel (10), the deflecting reels (12, 13) are drivable in the unwinding direction and the storage reel (10) is braked by means of an associated pressure reducing valve.

9. Device according to one of the preceding claims, **characterized in that** at least the deflecting reels (12, 13) of the reel arrangement forming the transport apparatus (11), and preferably also the storage reel (10), are arranged each with a stationary axis and horizontal turns.

10. Device according to one of the preceding claims with a pivotable boom (4), **characterized in that** at least the deflecting reels (12, 13) of the reel arrangement forming the transport apparatus (11) are attached, preferably laterally, to the pivotable boom (4).

11. Device according to claim 10, **characterized in that** the storage reel (10) assigned to the rinsing hose (6) and also a suction hose reel (9), which is assigned to a suction hose (5) guided via the boom (4), are each arranged in the region of a stationary pivot axis (a) of the boom (4) with stationary axis coaxially thereto and horizontal turns.

12. Device according to claim 11, **characterized in that** the suction hose reel (9) rests on the boom (4), and that the storage reel (10) associated with the rinsing hose (6) is placed on the suction hose reel (9).

13. Device according to claim 12, **characterized in that** the boom (4) is provided with a step (4a), which results in a niche for the reel package formed by the suction hose reel (9) and the storage reel (10).

14. Device according to claim 13, wherein the boom (4) is rotatably mounted on a preferably barrel-shaped container (3), **characterized in that** the container (3) is flattened at least on a part of its length above to form a niche associated with the step (4a) of the boom (4).

15. Device according to one of the preceding claims, **characterized in that** the rinsing hose (6) is equipped at its front end which is insertable into the channel with a channel nozzle (7) provided with reverse jet nozzles (8) and is retractable against the recoil effect of the reverse jet nozzles (8) by means of the transport apparatus (11), and that the drive of the storage reel (10) is relieved therefrom.

## Revendications

1. Dispositif de nettoyage de canal comprenant un tuyau flexible de rinçage (6) qui est apte à être alimenté en eau sous pression et qui peut être stocké sur un dévidoir de stockage (10) associé et traverse un appareil de transport (11) voisin du dévidoir de stockage (10), qui présente un ensemble de dévidoirs sur lequel le tuyau flexible de rinçage (6) est enroulé au moins une fois, **caractérisé par le fait que** l'ensemble de dévidoirs formant ledit appareil de transport (11) comprend deux dévidoirs de renvoi (12, 13) qui sont disposés à déport axial dans la direction radiale l'un à côté de l'autre et qui sont décalés l'un contre l'autre, dans la direction de leur axe de rotation, au moins de l'épaisseur du tuyau flexible de rinçage (6), et dont au moins un dévidoir de renvoi (12, 13) est disposé de manière basculée autour d'un axe de symétrie (b) coupant à angle droit les axes des deux dévidoirs de renvoi (12, 13), de telle sorte que, à chaque enroulement complet du tuyau flexible de rinçage (6) sur l'ensemble de dévidoirs formant l'appareil de transport (11), on obtient un pas du chemin associé au tuyau flexible de rinçage (6), qui correspond au déport axial des deux dévidoirs de renvoi (12, 13).

2. Dispositif selon la revendication 1, **caractérisé par le fait que** les deux dévidoirs de renvoi (12, 13) sont disposés de manière à être basculés en sens opposé autour de l'axe de symétrie (b) coupant à angle droit les axes des deux dévidoirs de renvoi (12, 13), dans lequel un pas correspondant à la moitié du déport axial des deux dévidoirs de renvoi (12, 13) est prévu, de préférence, respectivement dans la zone entre la montée et la descente du tuyau flexible de rinçage (6) sur ou bien du dévidoir de renvoi (12 ou bien 13) respectif.

3. Dispositif selon l'une quelconque des revendications précédentes, **caractérisé par le fait que** le tuyau flexible de rinçage (6) est enroulé plusieurs fois, de préférence deux fois sur l'ensemble de dévidoirs formant l'appareil de transport (11), dans lequel les dévidoirs de renvoi (12, 13) présentent chacun plusieurs, de préférence deux rainures circonférentielles (14) pour le guidage du tuyau flexible de rinçage (6) qui sont disposées parallèlement les unes derrières les autres dans la direction axiale et délimitées par des flasques latérales.

4. Dispositif selon la revendication 3, **caractérisé par le fait que** les flasques délimitant les rainures circonférentielles (14) font saille radialement sur un tambour qui forme le fond de rainure des rainures circonférentielles (14) et qui présente une structure de surface augmentant la transmission de force au tuyau flexible de rinçage (6) et réalisée de préférence en tant que denture (15).

5. Dispositif selon l'une quelconque des revendications précédentes, **caractérisé par le fait que** l'on prévoit des organes de pression associés aux dévidoirs de renvoi (12, 13), réalisés de préférence en tant que galets presseurs (16) et appliquant le tuyau flexible de rinçage (6).

6. Dispositif selon l'une quelconque des revendications précédentes, **caractérisé par le fait que** des éléments de guidage associés au tuyau flexible de rinçage (6), réalisés de préférence en tant que poulies de guidage (17), sont prévus au niveau du tracé du tuyau flexible de rinçage (6) entre les deux dévidoirs de renvoi (12, 13).

7. Dispositif selon l'une quelconque des revendications précédentes, **caractérisé par le fait que** le dévidoir de stockage (10) et le dévidoir de renvoi (12, 13) peuvent être entraînés par des moteurs hydrauliques (18, 19) du dispositif qui sont montés en parallèle lorsque le tuyau flexible de rinçage (6) est retiré du canal, dans lequel le moteur hydraulique (18) associé au tambour de stockage (10) présente un volume absorbé par tour inférieur à celui des moteurs hydrauliques (19) associés aux dévidoirs de renvoi (12, 13).

8. Dispositif selon l'une quelconque des revendications précédentes, **caractérisé par le fait que**, lorsque le tuyau flexible de rinçage (6) est déroulé du dévidoir de stockage (10), les dévidoirs de renvoi (12, 13) peuvent être entraînés dans la direction de déroulement et le dévidoir de stockage (10) est freiné au moyen d'un réducteur de pression associé.

9. Dispositif selon l'une quelconque des revendications précédentes, **caractérisé par le fait qu'**au moins les dévidoirs de renvoi (12, 13) de l'ensemble de dévidoirs formant l'appareil de transport (11), de préférence également le dévidoir de stockage (10), sont disposés chacun en ayant l'axe vertical et les enroulements horizontaux.

10. Dispositif selon l'une quelconque des revendications précédentes, comprenant une flèche (4) pivotante, **caractérisé par le fait qu'**au moins les dévidoirs de renvoi (12, 13) de l'ensemble de dévidoirs formant l'appareil de transport (11) sont montés de préférence latéralement sur ladite flèche (4) pivotante.

11. Dispositif selon la revendication 10, **caractérisé par le fait que** le dévidoir de stockage (10) associé au tuyau flexible de rinçage (6) ainsi qu'un dévidoir de tuyau flexible d'aspiration (9) associé à un tuyau flexible d'aspiration (5) qui passe sur la flèche (4) sont disposés chacun au niveau d'un axe vertical de pivotement (a) de la flèche (4), en ayant l'axe vertical coaxial à ceci et les enroulements horizontaux.

12. Dispositif selon la revendication 11, **caractérisé par le fait que** le dévidoir de tuyau flexible d'aspiration (9) repose sur la flèche (4) et que le dévidoir de stockage (10) associé au tuyau flexible de rinçage (6) est posé sur ledit dévidoir de tuyau flexible d'aspiration (9).

13. Dispositif selon la revendication 12, **caractérisé par le fait que** la flèche (4) est pourvue d'un gradin (4a) qui donne une niche pour le paquet de dévidoirs formé par le dévidoir de tuyau flexible d'aspiration (9) et le dévidoir de stockage (10).

14. Dispositif selon la revendication 13, dans lequel ladite flèche (4) est logée à rotation sur un récipient (3), de préférence en forme de fût, **caractérisé par le fait que** ledit récipient (3) est aplati en haut, au moins sur une partie de sa longueur, pour la formation d'une niche associée au gradin (4a) de la flèche (4).

15. Dispositif selon l'une quelconque des revendications précédentes, **caractérisé par le fait que** le tuyau flexible de rinçage (6) est équipé, à son extrémité avant apte à être introduite dans le canal, d'une buse de canal (7) pourvue de buses de repoussement (8) et peut être retiré au moyen de l'appareil de transport (11) à l'encontre de l'effet de repoussement des buses de repoussement (8), et que le mécanisme d'entrainement du dévidoir de stockage (10) en est déchargé.
